# FASCICULE DE BREVET EUROPEEN

(11) **EP 2 427 088 B1**
(45) Date de publication et mention de la délivrance du brevet: **20.02.2019**
(21) Numéro de dépôt: 10727460.7
(22) Date de dépôt: 05.05.2010
(51) Int. Cl.: A47J 43/046, A23C 11/10, A47J 27/00

(54) **APPAREIL DE PRÉPARATION CULINAIRE A VIS, ET PROCÉDÉ POUR LA RÉALISATION DE LAIT DE SOJA ET/OU POUR LA PRÉPARATION DE SOUPES ET/OU PURÉES ET/OU COULIS**
NAHRUNGSMITTELZUBEREITUNGSGERÄT MIT EINER SCHRAUBE UND VERFAHREN ZUR ZUBEREITUNG VON SOJAMILCH UND/ODER ZUR ZUBEREITUNG VON SUPPEN UND/ODER PÜREES UND/ODER COULIS
FOOD PREPARATION APPARATUS WITH A SCREW, AND METHOD FOR PREPARING SOYMILK AND/OR FOR PREPARING SOUPS AND/OR PUREES AND/OR COULIS

(30) Priorité: 07.05.2009 FR 0902230
(43) Date de publication de la demande: 14.03.2012
(73) Titulaire: SEB S.A., 69130 Ecully (FR)
(72) Inventeur: PERRIER, Matthieu, F-65310 Laloubere (FR); RAUDE, Christian, F-64160 Buros (FR); ROUCHES, Alexandre, F-65310 Horgues (FR)
(74) Mandataire: Bourrières, Patrice
(86) Numéro de dépôt international: PCT/FR2010/050865
(87) Numéro de publication internationale: WO 2010/128256

(56) Documents cités:
- EP-A1- 1 483 989
- EP-A1- 1 645 334
- EP-A1- 2 355 681
- WO-A1-2007/148872
- CN-A- 1 052 036
- US-A1- 2004 149 148

## Description

La présente invention concerne le domaine technique des appareils de préparation culinaire comportant une vis de pressage, prévus notamment pour la réalisation de lait de soja, ainsi que des procédés pour la réalisation de lait de soja.

La présente invention concerne également les appareils de préparation culinaire comportant une vis de pressage, prévus notamment pour la préparation de soupes et/ou de purées et/ou de coulis, ainsi que des procédés pour la préparation de soupes et/ou de purées et/ou de coulis.

La présente invention concerne plus particulièrement les appareils comportant une vis de pressage agencée dans un récipient de travail et reposant sur l'une de ses extrémités, ainsi que les procédés pour la réalisation automatique de lait de soja.

Le document WO 2007/148872 divulgue un appareil du type précité, dans lequel la vis de pressage est entourée par un filtre. Le récipient de travail comporte une première sortie agencée à l'extérieur du filtre, prévue pour l'écoulement du jus, et une deuxième sortie agencée à l'intérieur du filtre, prévue pour l'évacuation des résidus de pressage. Un inconvénient de cette réalisation réside dans l'obtention d'une quantité relativement importante de résidus de pressage. Un autre inconvénient de cette réalisation réside dans la nécessité d'utiliser un autre appareil pour obtenir du lait de soja prêt à boire, le lait de soja devant être chauffé en vue de sa consommation.

Le document CN2629610 divulgue un appareil pour le broyage et la filtration d'aliments comportant un dispositif de chauffe de liquide prévu pour l'écoulement de liquide chauffé sur les aliments avant leur broyage et leur filtration. Cet appareil permet d'obtenir du lait de soja prêt à boire. Un inconvénient de cet appareil réside toutefois dans le fonctionnement à haute vitesse de l'outil de travail rotatif utilisé pour la filtration de la préparation.

Un objet de la présente invention est de proposer un appareil prévu pour la préparation de lait de soja, qui soit simple à nettoyer.

Un autre objet de la présente invention est de proposer un appareil prévu pour la préparation de lait de soja, qui soit peu contraignant à manipuler.

Un autre objet de la présente invention est de proposer un appareil prévu pour la préparation de lait de soja, qui présente un bon rendement.

Un objet additionnel de la présente invention est de proposer un appareil prévu pour la préparation de lait de soja, qui permette d'obtenir un broyage fin.

Un objet additionnel de la présente invention est de proposer un appareil prévu pour la préparation de lait de soja, qui permette d'obtenir un broyage homogène.

Un objet additionnel de la présente invention est de proposer un appareil prévu pour la préparation automatique de lait de soja.

Un autre objet de la présente invention est de proposer un procédé pour la préparation automatique de lait de soja, qui présente une bonne efficacité et une bonne rapidité d'extraction.

Un autre objet de la présente invention est de proposer un appareil prévu pour la préparation de soupes et/ou de purées et/ou de coulis, qui soit simple à nettoyer.

Un autre objet de la présente invention est de proposer un appareil prévu pour la préparation de soupes et/ou de purées et/ou de coulis, qui soit peu contraignant à manipuler.

Un autre objet de la présente invention est de proposer un appareil prévu pour la préparation de soupes et/ou de purées et/ou de coulis, qui présente un bon rendement.

Un objet additionnel de la présente invention est de proposer un appareil prévu pour la préparation de soupes et/ou de purées et/ou de coulis, qui permette d'obtenir un broyage homogène.

Un objet additionnel de la présente invention est de proposer un appareil prévu pour la préparation de soupes et/ou de purées et/ou de coulis, qui permette d'obtenir des préparations tièdes ou chaudes prêtes à consommer.

Un autre objet de la présente invention est de proposer un procédé pour la préparation de soupes et/ou de purées et/ou de coulis qui permette d'obtenir des préparations tièdes ou chaudes prêtes à consommer.

Ces objets sont atteints avec un appareil de préparation culinaire, notamment un appareil pour la préparation de lait de soja, comportant un boîtier, un récipient de travail agencé sur le boîtier, un élément de filtration disposé dans le récipient de travail, et un couvercle, l'élément de filtration divisant le récipient de travail en une première chambre logeant une vis de pressage et une deuxième chambre présentant une sortie d'écoulement de jus, la vis de pressage présentant une zone d'appui annulaire, caractérisé en ce que la première chambre est dépourvue de sortie d'évacuation débouchant hors du récipient de travail, de sorte que les aliments présents dans la première chambre du récipient de travail sont soumis à l'action de la vis de pressage et peuvent seulement sortir de ladite première chambre par l'élément de filtration ou rester dans ladite chambre. Cette disposition permet d'exercer une pression plus importante sur les aliments pour les pousser au travers de l'élément de filtration. Un meilleur rendement peut être obtenu. Cette disposition permet notamment d'utiliser des graines de soja pré-trempées. Cette disposition permet de plus de limiter les déperditions thermiques. Cette disposition permet également d'utiliser des légumes précuits pour réaliser des soupes et/ou des purées et/ou des coulis.

Avantageusement, le couvercle comporte une goulotte débouchant dans la première chambre. Ainsi l'utilisateur peut verser si désiré des ingrédients dans la première chambre du récipient de travail pendant la réalisation de la préparation.

Avantageusement, une partie filtrante est agencée dans la moitié inférieure de l'élément de filtration, la moitié supérieure de l'élément de filtration étant dépourvue de partie filtrante. Cette disposition permet d'améliorer l'homogénéité de la préparation. En effet, la pression exercée par la vis de pressage dans la moitié supérieure de l'élément de filtration est plus faible que la pression exercée par la vis de pressage dans la moitié inférieure de l'élément de filtration. De ce fait, dans un appareil présentant une première partie filtrante agencée dans la moitié supérieure de l'élément de filtration et une deuxième partie filtrante agencée dans la partie inférieure de l'élément de filtration, la première partie filtrante est usuellement plus grossière que la deuxième partie filtrante, ce qui contribue à rendre la préparation moins homogène. Ainsi l'absence de partie filtrante dans la moitié supérieure de l'élément de filtration contribue à l'obtention d'une préparation plus homogène. Cette disposition permet aussi de plus de limiter les déperditions thermiques.

Avantageusement encore, l'élément de filtration est annulaire et la deuxième chambre entoure la première chambre. Cette disposition permet encore de limiter les déperditions thermiques. Cette disposition permet aussi d'améliorer le mélange de la préparation.

Avantageusement encore, l'appareil comporte un dispositif de production d'eau chaude débouchant dans la première chambre. Cette disposition permet de broyer les graines de soja mélangées avec de l'eau chaude, pour obtenir directement du lait de soja. Cette disposition permet également de broyer des légumes précuits mélangés avec de l'eau chaude, pour obtenir directement une soupe, une purée ou un coulis chaud ou tiède, notamment pour bébé.

Avantageusement alors, le dispositif de production d'eau chaude débouche dans la deuxième chambre. Cette disposition permet d'augmenter la température du lait de soja obtenu en utilisant la quantité d'eau chaude juste nécessaire pour broyer les graines de soja et en mélangeant le lait de soja obtenu en sortie de l'élément de filtration avec de l'eau chaude. Cette disposition permet également de faciliter le mélange de la préparation obtenue. Cette disposition permet également d'ajuster la température des soupes, voire la température des purées ou la température des coulis.

Avantageusement alors, le dispositif de production d'eau chaude débouche à l'opposé de la sortie d'écoulement par rapport à la vis de pressage. Cette disposition permet d'augmenter l'homogénéité de la préparation.

Avantageusement encore, la sortie d'écoulement est agencée au dessus du fond de la deuxième chambre. Cette disposition permet de conserver une petite partie de la préparation dans le récipient de travail. Cette disposition permet également de recueillir l'eau chaude issue de l'autre sortie d'écoulement. Cette disposition permet encore d'améliorer le mélange de l'eau chaude issue de l'autre sortie d'écoulement avec le lait de soja obtenu en sortie de l'élément de filtration. Cette disposition permet aussi d'améliorer le mélange de l'eau chaude issue de l'autre sortie d'écoulement avec la soupe, la purée ou le coulis obtenu en sortie de l'élément de filtration.

Avantageusement encore, un réceptacle est agencé au débouché de la sortie d'écoulement de jus. Cette disposition permet de faciliter la conservation d'une température élevée pour le lait de soja obtenu. Cette disposition permet de faciliter la conservation d'une température élevée pour la soupe, la purée ou le coulis obtenu.

Avantageusement alors, le réceptacle est associé à un moyen de chauffe finale. Cette disposition permet de cuire le lait de soja obtenu et/ou de maintenir la température du lait de soja obtenu. Cette disposition permet de réchauffer la soupe, la purée ou le coulis obtenu et/ou de maintenir la température de la soupe, de la purée ou du coulis obtenu.

Avantageusement encore, le réceptacle est monté amovible sur le boîtier. Cette disposition permet de faciliter le service du lait de soja obtenu ainsi que le nettoyage du réceptacle à jus. Cette disposition permet également de faciliter le service de la soupe, de la purée ou du coulis obtenu ainsi que le nettoyage du réceptacle à jus.

Ces objets sont également atteints avec un procédé de préparation de lait de soja en vue de sa consommation, consistant :
- à introduire de l'eau chaude et des graines de soja dans une chambre contenant une vis de pressage et communiquant avec une sortie d'écoulement au travers d'un élément de filtration, ladite chambre étant dépourvue de sortie d'évacuation alternative aux passages de l'élément de filtration, de sorte que les aliments présents dans ladite chambre sont soumis à l'action de la vis de pressage et peuvent seulement sortir de ladite chambre par l'élément de filtration ou rester dans ladite chambre,
- à presser les graines de soja au moyen de la vis de pressage contre l'élément de filtration agencé dans une paroi de ladite chambre,
- à cuire le lait de soja obtenu.

Ce procédé de préparation de lait de soja présente notamment l'avantage de réduire le temps nécessaire au broyage des graines de soja. Le lait de soja obtenu peut être prêt à consommer.

Avantageusement alors, ledit procédé consiste en outre à mélanger le lait de soja issu de l'élément de filtration avec de l'eau chaude, avant de cuire ledit lait de soja mélangé à l'eau chaude. Ce procédé de préparation de lait de soja permet d'améliorer la récupération du lait de soja.

Ces objets sont également atteints avec un appareil de préparation culinaire prévu pour la mise en oeuvre du procédé précité. Cet appareil permet d'obtenir du lait de soja prêt à consommer. Cet appareil est de plus facile à manipuler et à nettoyer.

Ces objets sont également atteints avec un procédé de préparation de soupes et/ou de purées et/ou de coulis, consistant :
- à introduire de l'eau chaude ainsi que des légumes précuits et/ou des fruits dans une chambre contenant une vis de pressage et communiquant avec une sortie d'écoulement au travers d'un élément de filtration, ladite chambre étant dépourvue de sortie d'évacuation alternative aux passages de l'élément de filtration, de sorte que les aliments présents dans ladite chambre sont soumis à l'action de la vis de pressage et peuvent seulement sortir de ladite chambre par l'élément de filtration ou rester dans ladite chambre,
- à presser les légumes précuits et/ou les fruits au moyen de la vis de pressage contre l'élément de filtration agencé dans une paroi de ladite chambre.

Ce procédé de préparation de soupes et/ou de purées et/ou de coulis présente notamment l'avantage d'obtenir des soupes, purées et/ou coulis homogènes, tièdes ou chauds, prêts à consommer, sans utiliser d'outil coupant susceptible de dégrader les qualités des aliments. L'utilisation d'une vis de pressage tournant à basse vitesse permet de moins dégrader les qualités nutritives des aliments, notamment lors de l'utilisation de pommes de terre précuites.

Ces objets sont également atteints avec un appareil de préparation culinaire prévu pour la mise en oeuvre du procédé précité. Cet appareil permet d'obtenir des soupes, purées et/ou coulis homogènes, tièdes ou chauds, prêts à consommer. Cet appareil est de plus facile à manipuler et à nettoyer.

L'invention sera mieux comprise à l'étude d'un exemple de réalisation, pris à titre nullement limitatif, illustré dans les figures annexées, dans lesquelles :
- la figure 1 est une vue en perspective d'un appareil selon l'invention, les moyens de chauffe et la motorisation étant représentés de manière schématique,
- la figure 2 est une vue en perspective d'un récipient de travail de l'appareil illustré sur la figure 1,
- la figure 3 est une vue en perspective d'un élément de filtration de l'appareil illustré sur la figure 1,
- la figure 4 est une vue en perspective d'une vis de pressage de l'appareil illustré sur la figure 1,
- la figure 5 est une vue en perspective du récipient de travail illustré sur la figure 2 logeant l'élément de filtration illustré sur la figure 3 et la vis de pressage illustrée sur la figure 4,
- la figure 6 est une vue en perspective d'un couvercle de l'appareil illustré sur la figure 1 monté sur le récipient de travail illustré sur la figure 2,
- la figure 7 est une vue en coupe verticale partielle de l'appareil illustré sur la figure 1.

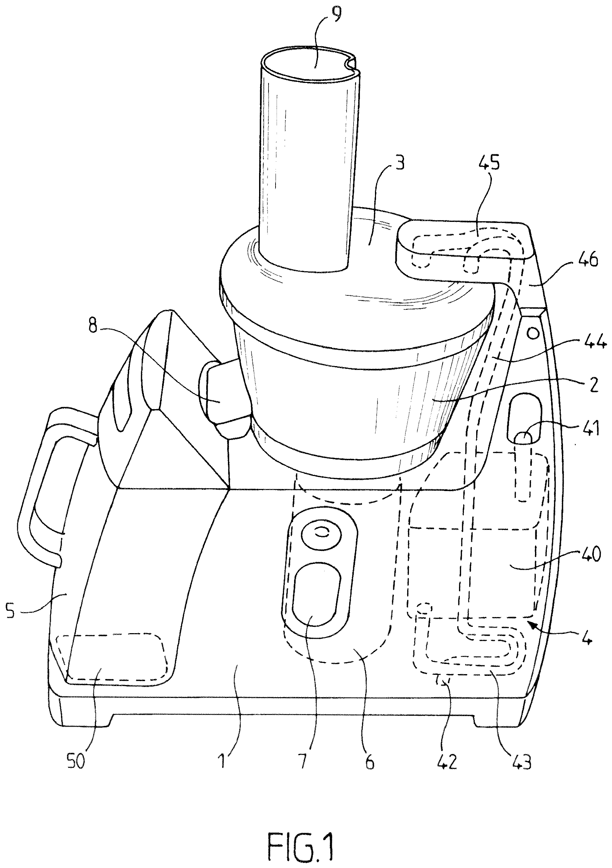

L'appareil de préparation culinaire illustré sur les figures 1 à 7 est notamment un appareil pour la préparation de lait de soja. Si désiré, cet appareil peut également être utilisé pour la préparation de soupes, de purées, de coulis, voire de jus.

Tel que montré sur la figure 1, cet appareil comporte un boîtier 1, un récipient de travail 2 agencé sur le boîtier 1, un couvercle 3 disposé sur le récipient de travail 2, un dispositif de production d'eau chaude 4, et un réceptacle 5 pour recueillir la préparation. Un moteur 6 est agencé dans le boîtier 1. L'appareil comporte également des moyens de commande 7.

Le récipient de travail 2 est monté amovible sur le boîtier 1 et est de préférence verrouillé sur le boîtier 1, notamment par baïonnette. Le récipient de travail 2 comporte une sortie d'écoulement 8. Le couvercle 3 comporte une goulotte 9 prévue pour l'introduction des ingrédients, notamment pour l'introduction des graines de soja, ou encore des légumes précuits ou des fruits. Si désiré, un poussoir (non représenté sur les figures) peut être inséré dans la goulotte 9.

Le dispositif de production d'eau chaude 4 est représenté de manière schématique sur la figure 1. Le dispositif de production d'eau chaude 4 agencé dans le boîtier 1 comporte un réservoir d'eau 40 susceptible d'être rempli par une ouverture de remplissage 41. Le dispositif de production d'eau chaude 4 comporte un moyen de chauffe initiale 42 prévu pour chauffer l'eau contenue dans le réservoir d'eau. Selon le mode de réalisation illustré sur la figure 1, le réservoir d'eau 40 alimente un conduit 43 accolé à un élément chauffant formant le moyen de chauffe initiale 42. Le conduit 43 est prolongé par un conduit ascendant 44 terminé par une tête de distribution 45. La tête de distribution est avantageusement agencée dans un élément 46 monté pivotant sur le boîtier 1.

Le réceptacle 5 est agencé au débouché de la sortie d'écoulement 8. Le réceptacle 5 est monté amovible sur le boîtier 1. Selon une réalisation adaptée pour la préparation de lait de soja, le réceptacle 5 est associé à un moyen de chauffe finale 50. Le moyen de chauffe finale 50 peut aussi être prévu pour chauffer et/ou pour maintenir au chaud les soupes, purées ou coulis.

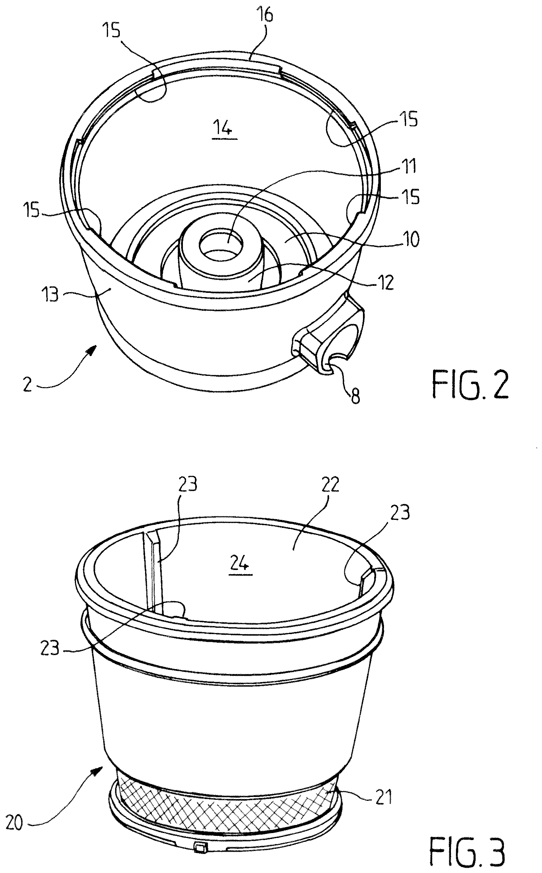

La figure 2 illustre le récipient de travail 2 retiré du boîtier 1. Le récipient de travail 2 présente un fond 10 prévu pour le passage d'un moyen d'entraînement (non représenté). A cet effet, le fond 10 comporte une ouverture inférieure 11 agencée au sommet d'une cheminée 12. Une paroi latérale 13 s'élève autour du fond 10. Le récipient de travail 2 présente une ouverture supérieure 14. Le récipient de travail 2 comporte de préférence des moyens de retenue du couvercle 3, formés avantageusement par des nervures internes 15 s'étendant à partir d'un bord supérieur 16 du récipient de travail 2. Le couvercle 3 peut ainsi être verrouillé par baïonnette sur le récipient de travail 2.

La figure 3 illustre un élément de filtration 20 prévu pour être disposé dans le récipient de travail 2. Une partie filtrante 21 est agencée dans la moitié inférieure de l'élément de filtration, la moitié supérieure de l'élément de filtration étant dépourvue de partie filtrante. Plus particulièrement, la partie filtrante 21 est annulaire. La partie filtrante 21 est agencée dans la partie inférieure de l'élément de filtration. L'élément de filtration 20 présente une paroi interne 22 comportant des nervures 23. L'élément de filtration 20 présente une ouverture d'introduction 24.

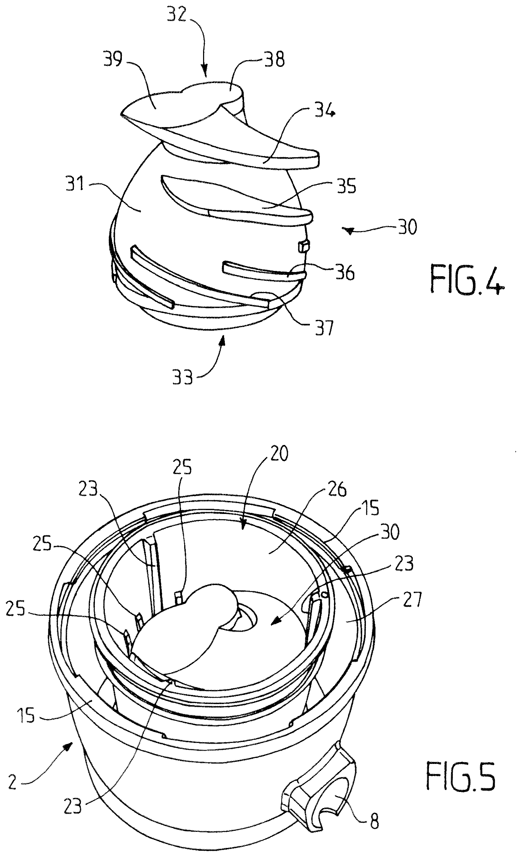

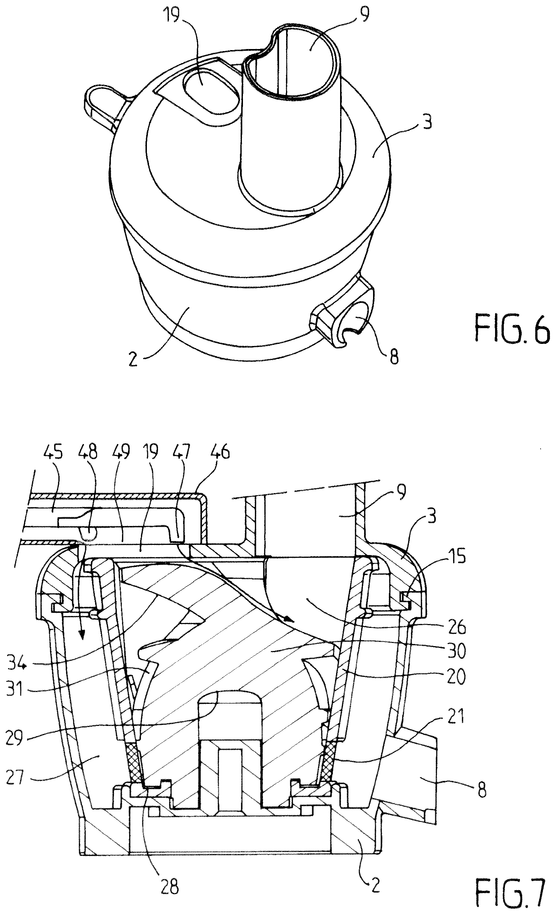

La figure 4 illustre une vis de pressage 30 prévue pour être disposée dans l'élément de filtration 20. La vis de pressage 30 comporte un moyeu central 31 présentant une section augmentant d'une extrémité supérieure 32 en direction d'une extrémité inférieure 33. Au moins un filet incliné 34 s'étend sur une partie de la périphérie du moyeu central 31. Le filet incliné 34 fait avantageusement le tour du moyeu central 31 et s'étend avantageusement sur la hauteur du moyeu central 31. Si désiré, un ou plusieurs autres filets inclinés 35, 36, 37 peuvent être ménagés sur le moyeu central 31. Le moyeu central 31 présente un sommet plan 38. Le filet incliné 34 présente également une extrémité plane 39. De préférence, le sommet plan 38 et l'extrémité plane 39 s'étendent dans le même plan. La vis de pressage 30 présente un organe d'entraînement inférieur 29, visible sur la figure 7, prévu pour être entraîné en rotation par un moyen de transmission (non représenté) relié au moteur 6.

Tel que représenté sur la figure 5, l'élément de filtration 20 divise le récipient de travail 2 en une première chambre 26 logeant la vis de pressage 30 et une deuxième chambre 27 présentant la sortie d'écoulement 8. Plus particulièrement, tel que bien visible sur les figures 3, 5 et 7, l'élément de filtration 20 est annulaire et la deuxième chambre 27 entoure la première chambre 26. La paroi interne 22 de l'élément de filtration 20 comporte des nervures intermédiaires 25 agencées entre les nervures 23.

La figure 6 illustre le couvercle 3 verrouillé sur le récipient de travail 2. Le couvercle 3 ménage un passage 19 prévu pour l'introduction d'eau chaude dans le récipient de travail 2.

Tel que montré sur la figure 7, la première chambre 26 est dépourvue de sortie d'évacuation débouchant hors du récipient de travail 2 lorsque la vis de pressage 30 et l'élément de filtration 20 sont en place dans le récipient de travail 2. La goulotte 9 débouche dans la première chambre 26. La vis de pressage 30 présente une zone d'appui annulaire 28. Plus particulièrement, la vis de pressage 30 repose sur l'élément de filtration 20. La sortie d'écoulement 8 est agencée au dessus du fond de la deuxième chambre 27.

Le dispositif de production d'eau chaude 4 présente une ouverture d'écoulement 47 agencée en regard d'une échancrure inférieure 49 ménagée dans l'élément 46. L'ouverture d'écoulement 47 est disposée au dessus du passage 19 ménagé dans le couvercle 3. Ainsi le dispositif de production d'eau chaude débouche dans la première chambre 26. De l'eau chaude peut s'écouler dans la première chambre 26 recevant les ingrédients tels que notamment les graines de soja.

De manière préférée, le dispositif de production d'eau chaude 4 présente une autre ouverture d'écoulement 48 également agencée en regard de l'échancrure inférieure 49 ménagée dans l'élément 46. L'autre ouverture d'écoulement 48 est disposée au dessus du passage 19 ménagé dans le couvercle 3. Ainsi le dispositif de production d'eau chaude 4 débouche dans la deuxième chambre 27. Ainsi de l'eau chaude peut s'écouler dans la deuxième chambre 27 et se mélanger avec le jus issu du pressage des ingrédients.

Plus particulièrement, tel que représenté sur la figure 7, l'autre ouverture d'écoulement 48 est disposée de manière diamétralement opposée à la sortie d'écoulement 8. Ainsi le dispositif de production d'eau chaude 4 débouche à l'opposé de la sortie d'écoulement 8 par rapport à la vis de pressage 20.

L'appareil selon l'invention fonctionne et s'utilise de la manière suivante.

Pour réaliser du lait de soja prêt à consommer, l'utilisateur remplit d'eau le réservoir d'eau 40 et verse des graines de soja pré-trempées dans le récipient de travail 2 par la goulotte 9. Les graines de soja arrivant dans la première chambre 26 du récipient de travail 2 descendent dans l'élément de filtration 20 sur le filet incliné 34 de la vis de pressage 30 et sont pressées entre le moyeu 31 et la paroi interne 22 de l'élément de filtration 20. Les nervures 23 et les autres nervures 25 conduisent les graines de soja au niveau de la partie filtrante 21. L'eau chaude issue du dispositif de production d'eau chaude 4 s'écoule dans la première chambre 26 par l'ouverture d'écoulement 47. La rotation de la vis de pressage 30 permet l'extraction du lait de soja dans la deuxième chambre 27 du récipient de travail 2. L'eau chaude issue du dispositif de production d'eau chaude 4 s'écoule dans la deuxième chambre 27 par l'autre ouverture d'écoulement 48 et se mélange avec le lait de soja extrait.

Des essais ont montré qu'un litre environ de lait de soja pouvait être obtenu en 3 minutes en utilisant un litre d'eau chauffée à au moins 70°C et 90 grammes de graines de soja pré-trempées.

Le lait de soja obtenu s'écoule par la sortie d'écoulement 8 dans le réceptacle 5. Le moyen de chauffe finale 50 est prévu pour réaliser la cuisson du lait de soja pendant 8 minutes à 100°C afin d'obtenir du lait de soja directement consommable.

Avantageusement, le temps d'écoulement de l'eau chaude produite par le dispositif de production d'eau chaude 4 est supérieur au temps nécessaire pour le broyage des ingrédients. Ainsi l'eau chaude s'écoulant en fin de cycle dans le récipient de travail 2 permet de terminer l'évacuation des ingrédients broyés et de commencer à rincer au moins partiellement la vis de pressage 30, l'élément de filtration 20 et l'intérieur du récipient de travail 2. Le nettoyage de l'appareil est ainsi facilité.

L'invention concerne ainsi aussi un procédé de préparation de lait de soja en vue de sa consommation, consistant :
- à introduire de l'eau chaude et des graines de soja dans une chambre contenant une vis de pressage,
- à presser les graines de soja au moyen de la vis de pressage contre un élément de filtration agencé dans une paroi de ladite chambre,
- à cuire le lait de soja obtenu.

Plus particulièrement, tel que bien visible sur la figure 7, la chambre contenant la vis de pressage 30 communique avec la sortie d'écoulement 8 au travers de l'élément de filtration 20, ladite chambre étant dépourvue de sortie d'évacuation alternative aux passages de l'élément de filtration.

La sortie d'écoulement 8 forme ainsi une sortie d'écoulement de jus, lait de soja, coulis, purées, soupes, par opposition à une sortie d'écoulement de déchets, non présente sur l'appareil. Le réceptacle 5 forme ainsi un réceptacle à jus, lait de soja, coulis, purées, soupes, par opposition à un réceptacle à déchets, non présent sur l'appareil.

L'invention concerne ainsi aussi un procédé de préparation de soupes et/ou de purées et/ou de coulis, consistant :
- à introduire de l'eau chaude ainsi que des légumes précuits et/ou des fruits dans une chambre contenant une vis de pressage et communiquant avec une sortie d'écoulement au travers d'un élément de filtration, ladite chambre étant dépourvue de sortie d'évacuation alternative aux passages de l'élément de filtration,
- à presser les légumes précuits et/ou les fruits au moyen de la vis de pressage contre l'élément de filtration agencé dans une paroi de ladite chambre.

L'eau chaude peut notamment être issue du dispositif de production d'eau chaude 4.

Si désiré, d'autres ingrédients complémentaires, tels que par exemple du lait en poudre ou du lait maternisé en poudre, peuvent être introduits dans ladite chambre avec les aliments, par exemple pour réaliser des soupes ou des purées.

La chambre peut notamment être formée par la première chambre 26 logeant la vis de pressage 30.

Plus particulièrement, tel que bien visible sur la figure 7, la première chambre 26 contenant la vis de pressage 30 communique avec la sortie d'écoulement 8 au travers de l'élément de filtration 20, ladite chambre étant dépourvue de sortie d'évacuation alternative aux passages de l'élément de filtration 20.

Avantageusement, ce procédé consiste en outre à mélanger le lait de soja issu de l'élément de filtration avec de l'eau chaude avant de cuire ledit lait de soja mélangé à l'eau chaude.

L'appareil selon l'invention peut également être notamment utilisé pour réaliser des jus ou des coulis à partir de fruits ou de légumes relativements mous, tels que par exemple les framboises ou les myrtilles, ou encore les carottes ou les betteraves cuites. L'utilisation du dispositif de production d'eau chaude 4 n'est alors pas indispensable.

L'appareil selon l'invention peut également être utilisé pour réaliser des soupes ou des purées à partir de légumes précuits. La taille des passages de l'élément de filtration 20 est alors adaptée à la préparation à obtenir. Si désiré, plusieurs éléments de filtration 20 différents peuvent être prévus afin de pouvoir réaliser de manière satisfaisante différentes préparations.

A titre de variante, le dispositif de production d'eau chaude 4 ne comporte pas nécessairement une ouverture d'écoulement et une autre ouverture d'écoulement distinctes. Une même ouverture d'écoulement peut être utilisée pour déverser l'eau chaude dans la première chambre 26 contenant la vis de pressage 30 ainsi que dans la deuxième chambre 27 présentant la sortie d'écoulement 8. Plusieurs ouvertures d'écoulement agencées au dessus de la première chambre 26 et/ou de la deuxième chambre 27 pourraient aussi être utilisées.

A titre de variante, la rotation de la vis de broyage 30 peut être commandée indépendamment du fonctionnement du dispositif de production d'eau chaude 4, et vice versa.

A titre de variante, le dispositif de production d'eau chaude 4 peut comporter une ou plusieurs électrovannes commandant l'ouverture d'écoulement 47 et/ou l'autre ouverture d'écoulement 48.

A titre de variante, la partie filtrante 21 de l'élément de filtration 20 n'est pas nécessairement annulaire.

A titre de variante, d'autres types de moyen de chauffe initiale 42 et/ou de moyen de chauffe finale 50 peuvent être envisagés.

A titre de variante, le moyen de chauffe initiale 42 et le moyen de chauffe finale 50 peuvent être formés par un même moyen de chauffe.

La présente invention n'est nullement limitée à l'exemple de réalisation décrit, mais englobe de nombreuses modifications dans le cadre des revendications.

## Revendications

1. Appareil de préparation culinaire, notamment appareil pour la préparation de lait de soja, comportant un boîtier (1), un récipient de travail (2) agencé sur le boîtier (1), un élément de filtration (20) disposé dans le récipient de travail (2), et un couvercle (3), l'élément de filtration (20) divisant le récipient de travail (2) en une première chambre (26) logeant une vis de pressage (30) et une deuxième chambre (27) présentant une sortie d'écoulement (8), la vis de pressage (30) présentant une zone d'appui annulaire (28), **caractérisé en ce que** la première chambre (26) est dépourvue de sortie d'évacuation débouchant hors du récipient de travail (2), de sorte que les aliments présents dans la première chambre (26) du récipient de travail (2) sont soumis à l'action de la vis de pressage (30) et peuvent seulement sortir de ladite première chambre (26) par l'élément de filtration (20) ou rester dans ladite première chambre (26).

2. Appareil de préparation culinaire selon la revendication 1, **caractérisé en ce que** le couvercle (3) comporte une goulotte (9) débouchant dans la première chambre (26).

3. Appareil de préparation culinaire selon l'une des revendications 1 ou 2, **caractérisé en ce qu'**une partie filtrante (21) est agencée dans la moitié inférieure de l'élément de filtration (20), la moitié supérieure de l'élément de filtration étant dépourvue de partie filtrante.

4. Appareil de préparation culinaire selon l'une des revendications 1 à 3, **caractérisé en ce que** l'élément de filtration (20) est annulaire et **en ce que** la deuxième chambre (27) entoure la première chambre (26).

5. Appareil de préparation culinaire selon l'une des revendications 1 à 4, **caractérisé en ce qu'**il comporte un dispositif de production d'eau chaude (4) débouchant dans la première chambre (26).

6. Appareil de préparation culinaire selon la revendication 5, **caractérisé en ce que** le dispositif de production d'eau chaude (4) débouche dans la deuxième chambre (27).

7. Appareil de préparation culinaire selon la revendication 6, **caractérisé en ce que** le dispositif de production d'eau chaude (4) débouche à l'opposé de la sortie d'écoulement (8) par rapport à la vis de pressage (30).

8. Appareil de préparation culinaire selon l'une des revendications 1 à 7, **caractérisé en ce que** la sortie d'écoulement (8) est agencée au dessus du fond de la deuxième chambre (27).

9. Appareil de préparation culinaire selon l'une des revendications 1 à 8, **caractérisé en ce qu'**un réceptacle (5) est agencé au débouché de la sortie d'écoulement (8).

10. Appareil de préparation culinaire selon la revendication 9, **caractérisé en ce que** le réceptacle (5) est associé à un moyen de chauffe finale (50).

11. Appareil de préparation culinaire selon l'une des revendications 9 ou 10, **caractérisé en ce que** le réceptacle (5) est monté amovible sur le boîtier (1).

12. Procédé de préparation de lait de soja en vue de sa consommation, consistant :
- à introduire de l'eau chaude et des graines de soja dans une chambre contenant une vis de pressage (30) et communiquant avec une sortie d'écoulement (8) au travers d'un élément de filtration (20), ladite chambre étant dépourvue de sortie d'évacuation alternative aux passages de l'élément de filtration (20), de sorte que les aliments présents dans ladite chambre sont soumis à l'action de la vis de pressage (30) et peuvent seulement sortir de ladite chambre par l'élément de filtration (20) ou rester dans ladite chambre,
- à presser les graines de soja au moyen de la vis de pressage (30) contre un l'élément de filtration (20) agencé dans une paroi de ladite chambre,
- à cuire le lait de soja obtenu.

13. Procédé de préparation de lait de soja selon la revendication 12, consistant en outre à mélanger le lait de soja issu de l'élément de filtration (20) avec de l'eau chaude avant de cuire ledit lait de soja mélangé à l'eau chaude.

14. Appareil de préparation culinaire selon l'une des revendications 5 à 7 ou selon l'une des revendications 8 à 11 lorsque dépendant de l'une des revendications 5 à 7, **caractérisé en ce qu'**il est prévu pour la mise en oeuvre du procédé selon la revendication 12.

15. Appareil de préparation culinaire selon l'une des revendications 6 ou 7 ou selon l'une des revendications 8 à 11 lorsque dépendant de l'une des revendications 6 ou 7, **caractérisé en ce qu'**il est prévu pour la mise en oeuvre du procédé selon la revendication 13.

16. Procédé de préparation de soupes et/ou de purées et/ou de coulis, consistant :
- à introduire de l'eau chaude ainsi que des légumes précuits et/ou des fruits dans une chambre contenant une vis de pressage (30) et communiquant avec une sortie d'écoulement (8) au travers d'un élément de filtration (20), ladite chambre étant dépourvue de sortie d'évacuation alternative aux passages de l'élément de filtration (20), de sorte que les aliments présents dans ladite chambre sont soumis à l'action de la vis de pressage (30) et peuvent seulement sortir de ladite chambre par l'élément de filtration (20) ou rester dans ladite chambre,
- à presser les légumes précuits et/ou les fruits au moyen de la vis de pressage (30) contre l'élément de filtration (20) agencé dans une paroi de ladite chambre.

17. Appareil de préparation culinaire selon l'une des revendications 5 à 7 ou selon l'une des revendications 8 à 11 lorsque dépendant de l'une des revendications 5 à 7, **caractérisé en ce qu'**il est prévu pour la mise en oeuvre du procédé selon la revendication 16.

## Patentansprüche

1. Gerät zur Nahrungsmittelzubereitung, insbesondere Gerät zur Zubereitung von Sojamilch, aufweisend ein Gehäuse (1), einen am Gehäuse (1) angeordneten Arbeitsbehälter (2), ein in dem Arbeitsbehälter (2) angeordnetes Filterelement (20) und einen Deckel (3), wobei das Filterelement (20) den Arbeitsbehälter (2) in eine erste Kammer (26), in der eine Pressschnecke (30) aufgenommen ist, und eine zweite Kammer (27) unterteilt, die einen Abflussauslass (8) aufweist, wobei die Pressschnecke (30) eine ringförmige Auflagezone (28) aufweist, **dadurch gekennzeichnet, dass** der ersten Kammer (26) ein Abflussauslass fehlt, der außerhalb von dem Arbeitsbehälter (2) mündet, so dass die Lebensmittel, die in der ersten Kammer (26) des Arbeitsbehälters (2) vorhanden sind, der Einwirkung der Pressschnecke (30) unterzogen sind und die erste Kammer (26) nur durch das Filterelement (20) verlassen oder in der ersten Kammer (26) bleiben können.

2. Gerät zur Nahrungsmittelzubereitung nach Anspruch 1, **dadurch gekennzeichnet, dass** der Deckel (3) eine Rutsche (9) aufweist, die in die erste Kammer (26) mündet.

3. Gerät zur Nahrungsmittelzubereitung nach einem der Ansprüche 1 oder 2, **dadurch gekennzeichnet, dass** ein Filterteil (21) in der unteren Hälfte des Filterelements (20) angeordnet ist, wobei in der oberen Hälfte des Filterelements ein Filterteil fehlt.

4. Gerät zur Nahrungsmittelzubereitung nach einem der Ansprüche 1 bis 3, **dadurch gekennzeichnet, dass** das Filterelement (20) ringförmig ist, und dass die zweite Kammer (27) die erste Kammer (26) umgibt.

5. Gerät zur Nahrungsmittelzubereitung nach einem der Ansprüche 1 bis 4, **dadurch gekennzeichnet, dass** es eine Vorrichtung zur Erzeugung von warmem Wasser (4) aufweist, die in die erste Kammer (26) mündet.

6. Gerät zur Nahrungsmittelzubereitung nach Anspruch 5, **dadurch gekennzeichnet, dass** die Vorrichtung zur Erzeugung von warmem Wasser (4) in die zweite Kammer (27) mündet.

7. Gerät zur Nahrungsmittelzubereitung nach Anspruch 6, **dadurch gekennzeichnet, dass** die Vorrichtung zur Erzeugung von warmem Wasser (4) gegenüber dem Abflussauslass (8) in Bezug auf die Pressschnecke (30) mündet.

8. Gerät zur Nahrungsmittelzubereitung nach einem der Ansprüche 1 bis 7, **dadurch gekennzeichnet, dass** der Abflussauslass (8) oberhalb des Bodens der zweiten Kammer (27) angeordnet ist.

9. Gerät zur Nahrungsmittelzubereitung nach einem der Ansprüche 1 bis 8, **dadurch gekennzeichnet, dass** ein Behälter (5) an der Mündung des Abflussauslasses (8) angeordnet ist.

10. Gerät zur Nahrungsmittelzubereitung nach Anspruch 9, **dadurch gekennzeichnet, dass** dem Behälter (5) ein Endheizmittel (50) zugeordnet ist.

11. Gerät zur Nahrungsmittelzubereitung nach einem der Ansprüche 9 oder 10, **dadurch gekennzeichnet, dass** der Behälter (5) abnehmbar an dem Gehäuse (1) angebracht ist.

12. Verfahren zur Herstellung von Sojamilch zum Verzehr, bestehend aus:
- Einbringen von warmem Wasser und Sojabohnen in eine Kammer, die eine Pressschnecke (30) enthält und mit einem Abflussauslass (8) über ein Filterelement (20) in Verbindung steht, wobei der Kammer ein alternativer Abflussauslass zu den Durchgängen des Filterelements (20) fehlt, so dass die Lebensmittel, die in der Kammer vorhanden sind, der Einwirkung der Pressschnecke (30) unterzogen sind und die Kammer nur durch das Filterelement (20) verlassen oder in der Kammer bleiben können,
- Pressen der Sojabohnen mittels der Pressschnecke (30) gegen das in einer Wand der Kammer angeordnete Filterelement (20),
- Kochen der erhaltenen Sojamilch.

13. Verfahren zur Herstellung von Sojamilch nach Anspruch 12, ferner umfassend das Mischen der Sojamilch, die aus dem Filterelement (20) stammt, mit warmem Wasser, bevor die Sojamilch, die mit warmem Wasser gemischt ist, gekocht wird.

14. Gerät zur Nahrungsmittelzubereitung nach einem der Ansprüche 5 bis 7 oder einem der Ansprüche 8 bis 11 in Abhängigkeit von einem der Ansprüche 5 bis 7, **dadurch gekennzeichnet, dass** es für die Durchführung des Verfahrens nach Anspruch 12 vorgesehen ist.

15. Gerät zur Nahrungsmittelzubereitung nach einem der Ansprüche 6 oder 7 oder nach einem der Ansprüche 8 bis 11 in Abhängigkeit von einem der Ansprüche 6 oder 7, **dadurch gekennzeichnet, dass** es für die Durchführung des Verfahrens nach Anspruch 13 vorgesehen ist.

16. Verfahren zur Zubereitung von Suppen und / oder Pürees und / oder Breien, bestehend aus:
- Einbringen von warmem Wasser sowie vorgekochtem Gemüse und / oder Früchten in eine Kammer, die eine Pressschnecke (30) enthält und mit einem Abflussauslass (8) über ein Filterelement (20) in Verbindung steht, wobei der Kammer ein alternativer Abflussauslass zu den Durchgängen des Filterelements (20) fehlt, so dass die Lebensmittel, die in der Kammer vorhanden sind, der Einwirkung der Pressschnecke (30) unterzogen sind und die Kammer nur durch das Filterelement (20) verlassen oder in der Kammer bleiben können,
- Pressen des vorgekochten Gemüses und / oder der Früchte mittels der Pressschnecke (30) gegen das in einer Wand der Kammer angeordnete Filterelement (20).

17. Gerät zur Nahrungsmittelzubereitung nach einem der Ansprüche 5 bis 7 oder einem der Ansprüche 8 bis 11 in Abhängigkeit von einem der Ansprüche 5 bis 7, **dadurch gekennzeichnet, dass** es für die Durchführung des Verfahrens nach Anspruch 16 vorgesehen ist.

## Claims

1. Cooking preparation device, in particular device for preparing soya milk, comprising a casing (1), a working vessel (2) arranged on the casing (1), a filtration element (20) arranged in the working vessel (2), and a cover (3), the filtration element (20) dividing the working vessel (2) into a first chamber (26) housing a pressing screw (30) and a second chamber (27) having a flow outlet (8), the pressing screw (30) having an annular bearing zone (28), **characterised in that** the first chamber (26) has no evacuation outlet leading outside of the working vessel (2), such that the food present in the first chamber (26) of the working vessel (2) is subjected to the action of the pressing screw (30) and can only exit said first chamber (26) by the filtration element (20) or remain in said first chamber (26).

2. Cooking preparation device according to claim 1, **characterised in that** the cover (3) comprises a duct (9) leading into the first chamber (26).

3. Cooking preparation device according to one of claims 1 or 2, **characterised in that** a filtering part (21) is arranged in the lower half of the filtration element (20), the upper half of the filtration element having no filtering part.

4. Cooking preparation device according to one of claims 1 to 3, **characterised in that** the filtration element (20) is annular and **in that** the second chamber (27) surrounds the first chamber (26).

5. Cooking preparation device according to one of claims 1 to 4, **characterised in that** it comprises a device for producing hot water (4) leading into the first chamber (26).

6. Cooking preparation device according to claim 5, **characterised in that** the device for producing hot water (4) leads into the second chamber (27).

7. Cooking preparation device according to claim 6, **characterised in that** the device for producing hot water (4) leads to the opposite side of the flow outlet (8) with respect to the pressing screw (30).

8. Cooking preparation device according to one of claims 1 to 7, **characterised in that** the flow outlet (8) is arranged above the bottom of the second chamber (27).

9. Cooking preparation device according to one of claims 1 to 8, **characterised in that** a container (5) is arranged leading to the flow outlet (8).

10. Cooking preparation device according to claim 9, **characterised in that** the container (5) is associated with a final heating means (50).

11. Cooking preparation device according to one of claims 9 or 10, **characterised in that** the container (5) is mounted so that it can be removed on the casing (1).

12. Method for preparing soya milk in view of the consumption thereof, consisting:
- of introducing hot water and soybeans in a chamber containing a pressing screw (30) and communicating with a flow outlet (8) through a filtration element (20), said chamber having no alternative evacuation outlet to the passages of the filtration element (20), such that the food present in said chamber is subjected to the action of the pressing screw (30) and can only exit said chamber by the filtration element (20) or remain in said chamber,
- of pressing the soybeans by means of the pressing screw (30) against a filtration element (20) arranged in a wall of said chamber,
- of cooking the soya milk obtained.

13. Method for preparing soya milk according to claim 12, further consisting of mixing the soya milk coming from the filtration element (20) with hot water before cooking said soya milk mixed with hot water.

14. Cooking preparation device according to one of claims 5 to 7 or according to one of claims 8 to 11 when depending on one of claims 5 to 7, **characterised in that** it is provided for the implementation of the method according to claim 12.

15. Cooking preparation device according to one of claims 6 or 7 or according to one of claims 8 to 11 when depending on one of claims 6 or 7, **characterised in that** it is provided for the implementation of the method according to claim 13.

16. Method for preparing soups and/or purees and/or sauces, consisting:
- of introducing hot water as well as precooked vegetables and/or fruits in a chamber containing a pressing screw (30) and communicating with a flow outlet (8) through a filtration element (20), said chamber having no alternative evacuation outlet to the passages of the filtration element (20), such that the food present in said chamber is subjected to the action of the pressing screw (30) and can only exit said chamber by the filtration element (20) or remain in said chamber,
- of pressing the precooked vegetables and/or fruits by means of the pressing screw (30) against a filtration element (20) arranged in a wall of said chamber.

17. Cooking preparation device according to one of claims 5 to 7 or according to one of claims 8 to 11 when depending on one of claims 5 to 7, **characterised in that** it is provided for the implementation of the method according to claim 16.
